# EUROPEAN PATENT SPECIFICATION

(11) **EP 3 400 586 B1**
(45) Date of publication and mention of the grant of the patent: **09.03.2022**
(21) Application number: 17736232.4
(22) Date of filing: 04.01.2017
(51) Int. Cl.: H04L 29/08, H04W 88/04

(54) **REMOTE CONTROL SYSTEM FOR VEHICLE**
FERNSTEUERUNGSSYSTEM FÜR FAHRZEUGE
SYSTÈME DE COMMANDE À DISTANCE POUR VÉHICULE

(30) Priority: 05.01.2016 US 201662274957 P; 23.12.2016 US 201615389889
(43) Date of publication of application: 14.11.2018
(73) Proprietor: Gentex Corporation, Zeeland, MI 49464 (US)
(72) Inventor: GEERLINGS, Steven L., Zeeland, Michigan 49464 (US); WRIGHT, Thomas S., Zeeland, Michigan 49464 (US)
(74) Representative: Müller-Boré & Partner Patentanwälte PartG mbB
(86) International application number: PCT/US2017/012138
(87) International publication number: WO 2017/120197

(56) References cited:
- WO-A1-02/01533
- WO-A1-2015/073810
- CN-A- 101 631 413
- US-A1- 2014 184 393
- US-A1- 2015 302 733
- US-A1- 2015 302 738

## Description

The present invention generally relates to the field of vehicle electronics and more particularly to a transmitter unit for mounting in a vehicle for facilitating communication between the vehicle and a remote electronic system.

WO 2015/073810 A1 describes an internet-connected garage door control system that includes a garage door opener (GDO) for opening and closing a garage door in response to signals received through the internet, and an in-vehicle remote garage door opener integrated into a vehicle for transmitting the signals through the internet to the GDO. The in-vehicle remote garage door opener includes an interface configured to communicate with an internet-connected device, a trainable RF transceiver for transmitting an RF signal to the GDO, a user-actuated input, an interface configured to communicate with an internet-connected device, and a controller, wherein, upon actuation of the user-actuated input, the controller is configured to at least one of (a) request a signal to be transmitted by the internet-connected device through the internet to the GDO, and (b) cause the trainable RF transceiver to transmit the RF signal to the GDO.

US 2015/302738 A1 describes a trainable transceiver for installation in a vehicle and for controlling a remote device including a transceiver circuit configured based on training information, to control the remote device, a communications device configured to communicate with a mobile communications device, an output device, and a control circuit coupled to the transceiver circuit, coupled to the communications device, and coupled to the output device. The control circuit is configured to receive notification information from the mobile communications device via the communications device, and wherein the control circuit is configured to generate an output using the output device based on the notification information.

US 2015/302733 A1 describes a trainable transceiver for installation in a vehicle and for controlling a remote device including a transceiver circuit configured based on training information to communicate with the remote device, a communications device configured to communicate with a mobile communications device, and a control circuit coupled to the transceiver circuit, and coupled to the communications device. The control circuit is configured to transmit diagnostic information related to the trainable transceiver to a mobile communications device via the communications device.

### SUMMARY OF THE DISCLOSURE

The invention is set out in the appended claims.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a projected view of a communication system for a vehicle;
FIG. 2 is block diagram of a communication system demonstrating a plurality of communication interfaces;
FIG. 3 is a block diagram of an exemplary embodiment of a mobile device, which is in communication with the communication system;
FIG. 4 is a flow chart demonstrating a method of operation of a communication system;
FIG. 5 is a flow chart demonstrating a method of operation of a communication system; and
FIG. 6 is a flow chart demonstrating a method of operation of a communication system in accordance with the disclosure.

### DETAILED DESCRIPTION

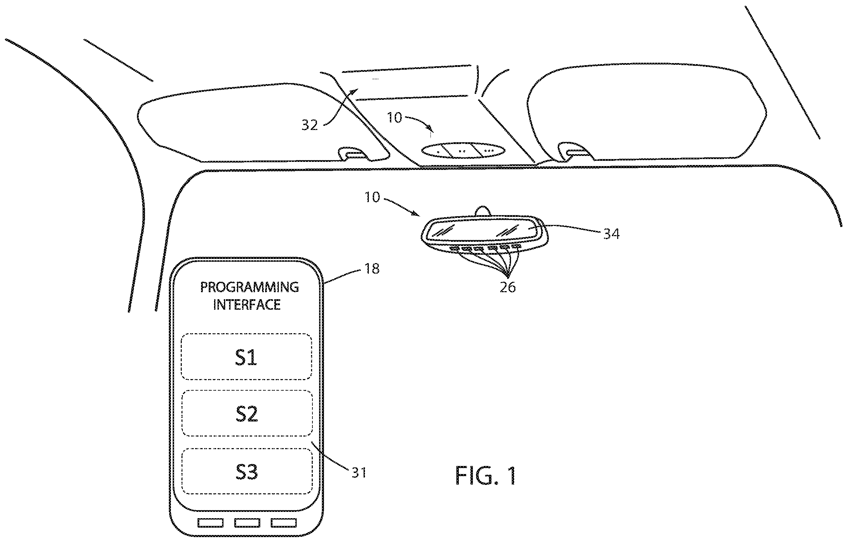

For purposes of description herein, the terms "upper," "lower," "right," "left," "rear," "front," "vertical," "horizontal," and derivatives thereof shall relate to the invention as oriented in FIG. 1. It is to be understood that the disclosed embodiments of the invention can assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but can include other elements not expressly listed or inherent to such process, method, article, or apparatus. An element proceeded by "comprises a ... " does not, without more constraints, preclude the existence of additional identical elements in the process, method, article, or apparatus that comprises the element.

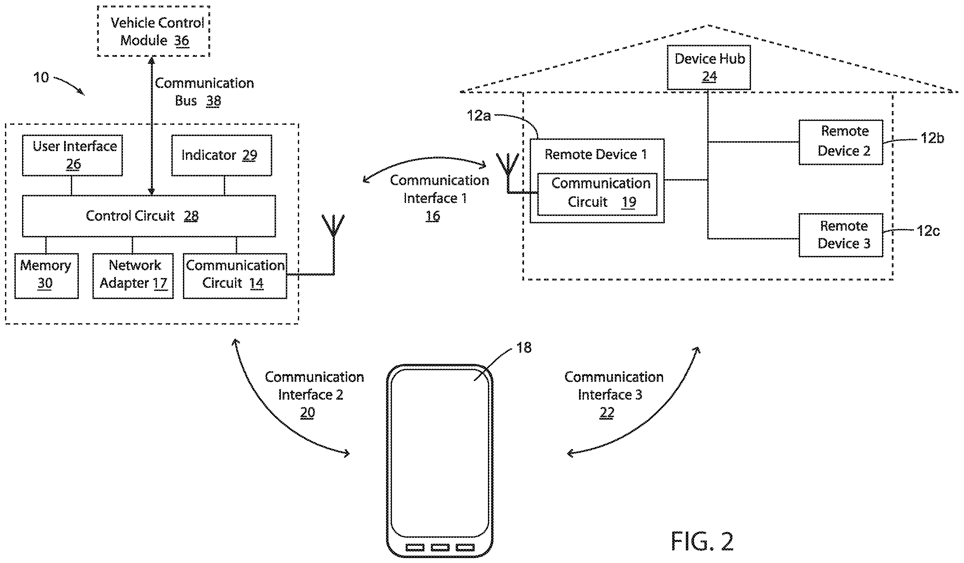

Referring to FIGS. 1 and 2, the disclosure provides for a communication system 10 operable to remotely control one or more remote devices 12 (e.g. 12a, 12b, and 12c). The communication system 10 comprises a communication circuit 14 configured to communicate data and/or signals with the one or more remote devices 12 via a first communication interface 16. The communication circuit 14 corresponds to a transceiver or transmitter configured to control various remote devices. For example, the communication circuit 14 comprises a trainable transceiver (e.g. a Homelink^{™} trainable transceiver) or a selectively configurable transmitter configured to control at least one of a plurality of remote devices. In this configuration, the communication system 10 provides for the remote control of at least one remote device.

In an exemplary embodiment, the communication system 10 further comprises a network adapter 17 configured to provide for communication with mobile device 18 via a second communication interface 20. The network adapter 17 corresponds to a wireless network adapter or any form of communication circuit operable to provide for the second communication interface 20 between the communication system 10 and the mobile device 18. For example, the mobile device 18 corresponds to a smartphone paired with the communication system 10 via network adapters in the form of radio frequency transceivers and/or a protocol such as Bluetooth^{®} communication. In this configuration, the communication system 10 and the mobile device 18 exchanges information such as status, notifications, activation signals, training information, activation signal parameters, device identification information (e.g., the serial number, make, and/or model of a home electronics device), and/or other information.

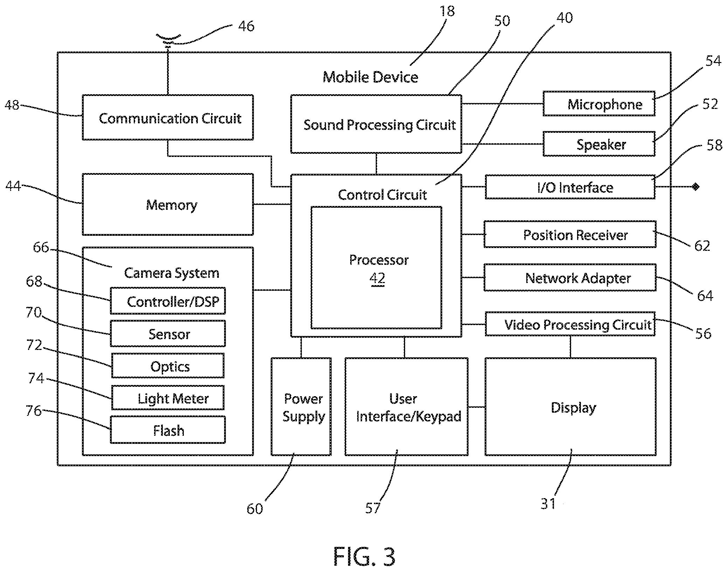

In some embodiments, the mobile device 18 corresponds to a mobile communication device (e.g., cell phones, tablets, smartphones, or other communication devices). In some embodiments, mobile communications devices include other mobile electronics devices such as laptops, personal computers, and/or other devices. An exemplary embodiment of the mobile device 18 is discussed further in reference to FIG. 3. In still further embodiments, the communication system 10 is configured to communicate with networking equipment such as routers, servers, cellular towers, switches, and/or other hardware for enabling network communication. The network may be the internet, an intranet, and/or a cloud computing system architecture.

In some embodiments, the mobile device 18 is in communication with the remote devices 12 via a wireless communication circuit, which may correspond to a cellular communication circuit forming a third communication interface 22. In such a configuration, the mobile device 18 operates as an intermediate communication device. The third communication interface 22 may correspond to a remote network connection, for example, a cellular, network, or cloud based internet communication interface. In some embodiments, the third communication interface 22 may correspond to various other communication protocols, including but not limited to Bluetooth^{®}, Bluetooth^{®} low energy (BLE), Wi-Fi (IEEE 802.11), ZigBee, etc. The remote devices 12 may each provide for wireless network connectivity and/or is in communication with the mobile device 18 via a device hub 24. The device hub 24 is configured to communicate with each of the remote devices wirelessly and/or via one or more wired connections. In this configuration, the mobile device 18 is configured to communicate with the remote devices via the third communication interface 22 to control one or more features of the remote devices 12.

In an exemplary embodiment, the communication system 10 is operable to send a control signal to the mobile device 18 via the second communication interface 20. The control signal corresponds to a programmable instruction or previously designated command configured to instruct the mobile device 18 to communicate with one of more of the remote devices 12 via the third communication interface 22. For example, in response to an input into a user interface 26 of the communication system 10, a control circuit 28 of the communication system 10 may send a control signal to the mobile device 18 via the second communication interface 20. In response to receiving the control signal, the mobile device 18 may identify the previously designated or programmed command and communicates the command to at least one of the remote devices 12 via the third communication interface 22.

As discussed herein, the communication system 10 communicates with at least one remote device 12 via the first communication interface 16, which is enabled by the communication circuit 14. In some embodiments, the communication system 10 is also configured to communicate with at least one remote device 12 via the second communication interface 20 and the third communication interface 22. Such communication may be enabled by the network adapter 17 and communication circuitry of the mobile device 18. The communication with remote devices 12 via the network adapter 17 may be referred to as a cloud based communication, which may incorporate communication via one or more web based servers. In this configuration, the communication system 10 is operable to communicate with the remote devices 12 over great distances and outside a range of the communication circuit 14.

The remote devices 12 may correspond to various electronic devices, for example a garage door opener, gate opener, lights, security system, door locks, thermostats, electronic devices, and various devices, which may be configured to receive activation signals, control signals, and/or output state information. The remote devices 12 need not be associated with a residence and may include devices associated with businesses, government buildings or locations, or various locales. Remote devices may include mobile computing devices such as mobile phones, smartphones, tablets, laptops, computing hardware in other vehicles, and/or other devices configured to receive activation signals and/or control signals.

Still referring to FIGS. 1 and 2, the communication system 10 includes the user interface 26 in the form of one or more buttons in communication with the control circuit 28. In some embodiments, the user interface 26 includes input devices such as touchscreen displays, switches, microphones, knobs, touch sensor (e.g., projected capacitance sensor resistance based touch sensor, resistive touch sensor, or other touch sensor), proximity sensors (e.g., projected capacitance, infrared, ultrasound, infrared, or other proximity sensor), or other hardware configured to generate an input from a user action.

In some embodiments, the communication system 10 may comprise an indicator 29 or display. The indicator 29 may display data to a user or otherwise provide outputs. For example, the indicator 29 may include an indicator light and/or a display screen (e.g., a display as part of a touchscreen, liquid crystal display, e-ink display, plasma display, light emitting diode (LED) display, or other display device), speaker, haptic feedback device (e.g., vibration motor), LEDs, or other hardware component for providing an output. The control circuit 28 may send information and/or control signals or instructions to the indicator 29. For example, the control circuit 28 may send output instructions to the indicator 29 causing the display of an image.

The control circuit 28 may include various types of control circuitry, digital and/or analog, and may include a microprocessor, microcontroller, application-specific integrated circuit (ASIC), graphics processing unit (GPU), or other circuitry configured to perform various input/output, control, analysis, and other functions to be described herein. In other embodiments, the control circuit 28 may be a SoC individually or with additional hardware components described herein. The control circuit 28 may further include memory 30 (e.g., random access memory, read only memory, flash memory, hard disk storage, flash memory storage, solid state drive memory, etc.). In further embodiments, the control circuit 28 may function as a controller for one or more hardware components included in the communication system 10. For example, the control circuit 28 may function as a controller for a touchscreen display or other operator input device, a controller for a transceiver, transmitter, receiver, or other communication device (e.g., implement a Bluetooth^{®} communications protocol).

In some embodiments, the control circuit 28 is configured to receive inputs from the user interface 26. The inputs are converted into control signals that are identified and utilized to output one or more control signals and/or transmit data via the network adapter 17, the communication circuit 14, a communication bus, and/or any communication circuit. In this configuration, the communication system 10 communicates (e.g. send and/or receive signals and/or data) to control various remote devices 12. In some embodiments, the communication circuit 14 is trainable or configurable to replicate the function of one or more original wireless transmitters that are associated with one or more of the remote devices 12.

The memory 30 is used to facilitate the functions of the communication system 10 as described herein. Memory 30 may include computer code modules, data, computer instructions, or other information which is executed by the control circuit 28 or otherwise facilitate the functions of the communication system 10 described herein. For example, memory 30 may include encryption codes, pairing information, identification information, a device registry, etc. Memory 30 and/or the control circuit 28 facilitates the functions described herein using one or more programming techniques, data manipulation techniques, and/or processing techniques such as using algorithms, routines, lookup tables, arrays, searching, databases, comparisons, instructions, etc.

The communication circuit 14 corresponds to a transceiver circuit or transmitter circuit coupled to the control circuit 28. The transceiver circuit allows the communication system 10 to transmit and/or receive wireless communication signals. The wireless communication signals are be transmitted to or received from a variety of wireless devices (e.g., an original transmitter, home electronic device, mobile communications device, and/or remote device). The communication circuit 14 is controlled by the control circuit 28. For example, the control circuit 28 can turn on or off the communication circuit 14, the control circuit 28 may send data using the communication circuit 14, format information, an activation signal, control signal, and/or other signal or data for transmission via the communication circuit 14, or otherwise control the communication circuit 14. Inputs from the communication circuit 14 may also be received by the control circuit 28.

In some embodiments, the communication circuit 14 may include additional hardware such as processors, memory, integrated circuits, antennas, etc. The communication circuit 14 processes information prior to transmission or upon reception and prior to passing the information to the control circuit 28. In some embodiments, the communication circuit 14 may be coupled directly to memory 30 (e.g., to store encryption data, retrieve encryption data, etc.). In further embodiments, the communication circuit 14 includes one or more transceivers, transmitters, receivers, etc. For example, the communication circuit 14 may include an optical transceiver, near field communication (NFC) transceiver, etc. In some embodiments, the communication circuit 14 may be implemented as a SoC.

The control circuit 28 may also be coupled to the network adapter 17, receivers, and/or transmitters. In some embodiments, the network adapter 17 is configured to communicate with the remote devices 12. In some embodiments, the network adapter 17 is or includes a cellular transceiver. In this configuration, the communication system 10 may use the network adapter 17 and/or an additional transceiver (e.g., a cellular transceiver) to access the internet, other networks, and/or network hardware to control the remote devices 12. In some embodiments, the communication system 10 may access the internet, other networks, and/or network hardware through an intermediate device in communication with the communication system 10 such as the mobile device.

In an exemplary embodiment, the network adapter 17 is in communication with the mobile device 18 and is configured to send/receive data and/or control signals to the remote devices 12 via the wireless communication circuit of the mobile device 18. The network adapter 17 may correspond to communicate with the mobile device 18 via various wireless communication protocols forming the second communication interface 20. For example, communication protocols may include but are not limited to wireless protocols (e.g. Bluetooth^{®}, Bluetooth^{®} low energy (BLE), Wi-Fi (IEEE 802.11), ZigBee, near field communication (NFC), cellular, etc.), a wired interface and/or protocol (e.g., Ethernet, universal serial bus (USB), Firewire, etc.), or other communications connection (e.g. infrared, optical, ultrasound, etc.). In this configuration, the communication system 10 communicates with the mobile device 18 via the second communication interface 20. In response to the communication from the communication system 10, the mobile device 18 communicates with the remote devices via the third communication interface 22.

As illustrated in FIGS. 1 and 2, the mobile device 18 is shown in communication with the communication system 10 via the second communication interface 20. For example, in an exemplary embodiment, the communication system 10 may communicate with the mobile device 18 to complete a programming function. The programming function may correspond to an interactive instruction communicated between the mobile device 18 and the communication system 10. In particular, the communication system 10 is configured to send commands instructing the mobile device 18 to complete one or more predetermined or programmed tasks.

In an exemplary embodiment, one or more of the inputs of the user interface 26 is programmed to cause an output command to be communicated to the mobile device 18. Such commands may include various tasks, which are preconfigured or programmed by a user to customize the tasks. For example, the communication system 10 submits an instruction to the mobile device 18 requesting a first preconfigured task. The task may correspond to sending a preconfigured message to one or more predetermined recipients. The message could contain custom text, for example, "On my way home." The message may correspond to an email, short message service (SMS) and/or multimedia message service (MMS), and/or various formats that are sent via a communication circuit 48 of the mobile device 18.

The communication system 10 is operable to output a variety of commands that may provide instructions to the mobile device 18 via the second communication interface 20. For example, the commands received from the communication system 10 may instruct the mobile device 18 to activate specific programs, call specific contacts, map destinations, take pictures, and/or complete various additional functions that may be activated in response to a command from the communication system 10. Each of the commands is programmed to one or more of the inputs of the user interface 26 via the mobile device 18. An example of a programming operation of the user interface 26 is demonstrated by the programmable functions demonstrated as buttons S1, S2, and S3 on a display 31 of the mobile device 18.

Referring again to FIGS. 1 and 2, the third communication interface 22 may correspond to a wireless or cellular communication interface and in some embodiments, may correspond to a cloud based communication. For example, the wireless communication circuit of the mobile device 18 is configured to communication via one or more wireless networks, such as cellular network. Examples of wireless communication that may correspond to the third communication interface 22 may include, but are not limited to GSM, GPRS, CDMA, EDGE, 3G, 4G, Bluetooth^{®}, Bluetooth^{®} low energy (BLE), WIFI, WIMAX, LAN, Ethernet, etc. In this configuration, the mobile device is in communication with one or more of the remote devices 12 directly and/or via the device hub 24.

The mobile device 18 may communicate directly with one or more of the remote devices 12. For example, a remote device may comprise a wireless transceiver configured to communicate with the mobile device 18 via a Bluetooth^{®}, BLE connection, or similar communication protocols presently known or to be developed. The device hub 24 may utilize various networking and or communication protocols to communicate with the remote devices 12. Such communication may include networking equipment such as routers, servers, cellular towers, switches, and/or other hardware for enabling network communication. The network may be the internet, an intranet, and/or a cloud computing system architecture.

The communication system 10 is shown in communication with the first remote device 12a via the first communication interface 16, which is formed by the communication circuit 14 and the communication circuit 19. The communication system is further in communication with the first remote device 12a, a second remote device 12b, and a third remote device 12c via the second communication interface 20 and the third communication interface 22. As discussed previously, in an exemplary embodiment, the first remote device 12a may correspond to a remote controlled barrier, such as a garage door. In some embodiments, the communication circuit 14 may further be configured to communicate with additional remote devices via the first communication interface 16. For example, the control circuit 28 may be configured to control a fourth remote device and a fifth remote device via the first communication interface 16.

The communication circuit 14 may be configured to transmit and/or learn various activation signals configured to activate a function of the remote devices 12. Activation signals may include control signals, control data, encryption information (e.g., a rolling code, rolling code seed, look-a-head codes, secret key, fixed code, or other information related to an encryption technique), or other information transmitted to a home electronic device and/or remote device. Activation signals may have parameters such as frequency or frequencies of transmission (e.g., channels), encryption information (e.g., a rolling code, fixed code, or other information related to an encryption technique), identification information (e.g., a serial number, make, model or other information identifying a home electronic device, remote device, and/or other device), and/or other information related to formatting an activation signal to control a particular home electronic device and/or remote device.

In some embodiments, the communication circuit 14 is configured to receive information from one or more electronic devices and/or remote devices 12. The communication circuit 14 receives information using a transceiver to send activation signals and/or other information to home electronic devices and/or remote devices 12. The transceiver is configured to send and receive information to and from the remote devices 12. In some embodiments, the communication circuit 14 may correspond to a transmitter configured for one-way communication with a home electronic device and/or remote device (e.g., sending activation signals to the device). The communication circuit 14 may receive information about the home electronic device and/or remote device using additional hardware. The information about the home electronic device and/or remote device is received from an intermediary device such as an additional remote device and/or a mobile device 18.

A communication system 10 may also receive information from and/or transmit information to other devices configured to communicate with the communication system 10. For example, the communication circuit 14 may receive information for cameras (e.g., imaging information may be received) and/or other sensors. The cameras and/or other sensors may communicate with the communication system 10 wirelessly via the first communication interface 16 (e.g., using one or more transceivers) or through a wired connection.

In some embodiments, the communication circuit 14 is configured to send and/or receive information (e.g., activation signals, control signals, control data, status information, or other information) using a radio frequency signal. For example, the communication circuit 14 may transmit and/or receives radio frequency signals in the ultra-high frequency range, typically between 260 and 960 megahertz (MHz) although other frequencies may be used. In other embodiments, communication circuit 14 may include additional hardware for transmitting and/or receiving signals (e.g., activation signals and/or signals for transmitting and/or receiving other information). For example, the communication circuit 14 may include a light sensor and/or light emitting element (e.g. the indicator 29), a microphone and/or speaker, a cellular transceiver, an infrared transceiver, or other communication device.

The communication system 10 may be configured (e.g., trained or otherwise configured) to send activation signals and/or other information to a particular device of the remote devices 12. The communication system 10 may also be configured to receive control signals and/or information from the particular device. For example, the communication circuit 14 may be configured to control an opening function of a door or barrier controlled by a first remote device 12a of the remote devices 12.

The communication system 10 is mounted or otherwise attached to a vehicle in a variety of locations. For example, the communication system 10 may be integrated into a dashboard or center stack (e.g., infotainment center), or a headliner 32 of a vehicle. The communication system 10 may be located in other peripheral locations. For example, the communication system 10 may be removably mounted to a visor. The communication system 10 may be mounted to other surfaces of a vehicle (e.g., dashboard, windshield, door panel, bumper, or other vehicle component). For example, a trainable transceiver may be secured with adhesive. In some embodiments, a trainable transceiver is integrated in a rear view mirror 34 of the vehicle.

In some embodiments, a vehicle may be retrofit to include a communication system. This may include attaching a communication system to a vehicle surface using a clip, adhesive, or other mounting hardware as described above. Alternatively, it may include replacing a vehicle component with one that includes an integrated communication system and/or installing a vehicle component, which includes an integrated communication system. For example, an aftermarket rear view mirror, vehicle camera system (e.g., one or more cameras and one or more display screens), and/or infotainment center may include an integrated communication system. In further embodiments, one or more components of a communication system may be distributed within the vehicle.

Still referring to FIG. 2, the communication system 10 may be in communication with a vehicle control module 36 via a communication bus 38. The connection to the vehicle control module 36 or electronics system may be made using a various wired or wireless connections. The connection between the communication system 10 and the vehicle control module 36 may provide for the communication system 10 to access, control, provide outputs to, receive inputs from, and/or otherwise communicate with components of the vehicle. The connection between the communication system 10 and the vehicle control module 36 may provide for the communication system 10 to make use of existing vehicle hardware for use with functions of the communication system 10.

The vehicle control module 36 may include processors (e.g., electronic control units (ECU), engine control modules (ECM), or other vehicle processors), memory, buses (e.g., controller area network (CAN) bus, sensors, on-board diagnostics equipment (e.g., following the (OBD)-II standard or other protocol), cameras, displays, transceivers, infotainment systems, and/or other components integrated with a vehicle's electronics systems or otherwise networked (e.g., a controller area network of vehicle components). For example, the vehicle control module 36 may include, be coupled to, and/or otherwise communicate with a GPS interface. The GPS interface is configured to receive position information (e.g., from a GPS satellite source). Using the vehicle control module 36, communication bus 38, and/or control circuit 28, the communication system 10 may have access to position information from the GPS interface (e.g., GPS coordinates corresponding to the current location of the vehicle).

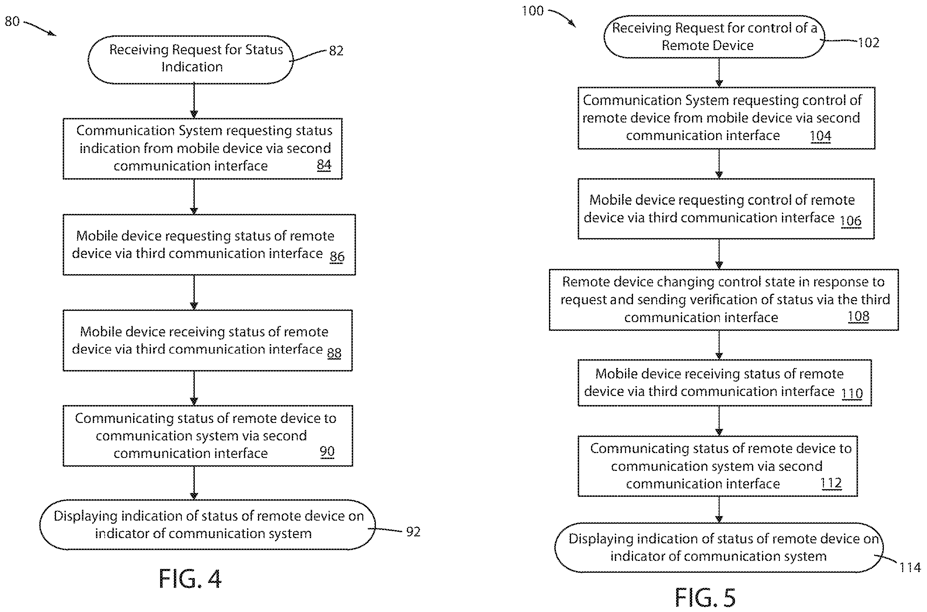

In some embodiments, the communication system 10 utilizes the position or location of the vehicle to enable one or more functions. For example, a function of a control button of the user interface 26 varies based on the location of the vehicle. A function of the button may change from a first programming configured to control a first remote device proximate a first location to a second programming configured to control a second remote device proximate a second location. In this way, the communication system 10 provides for various location-based functions. Further discussion of specific control methods for the communication system 10 are further discussed in reference to FIGS. 4, 5, and 6.

Additionally, based on the GPS coordinates of the vehicle, the communication system 10 may automatically determine whether to transmit a control signal via the first communication interface 16 or the third communication interface 22. For example, the first communication interface 16 is limited to communicate over a first range, while the third communication interface 22 has a second communication range that is greater than the first communication range. Accordingly, the communication system 10 directs a control instruction for a remote device 12 via the first communication interface 16 in response to the vehicle being within the first communication range. The communication system 10 further communicates the control instruction for the remote device 12 via the third communication interface 22 and through the second communication interface 20 in response to the vehicle being beyond or outside the first communication range.

For example the first communication range may be limited to less than five kilometers in some embodiments and less than 1 kilometer in some embodiments. In some embodiments, the first communication range may be less than 200 meters. The second communication range may be greater than 10 kilometers and may extend thousands of kilometers or worldwide with limitations based only on specific coverage regions. The differences in the range of the communication interfaces 16 and 22 may correspond to the communication protocols and hardware utilized to enable such communication. For example, the first communication range may be limited to an ultra-high frequency (e.g. 900 MHz) while the third communication range may be based on cellular coverage and extend much further that the first communication range.

A location of the remote device 12 is identified by the control circuit 28 based on a programming of the remote device 12 based on the GPS location identified during an initial setup of the first communication interface 16 with the remote device. Thereafter, the control circuit 28 may identify the distance from the vehicle to the remote device 12 based on the GPS location. If the GPS location indicates that the vehicle is within the first range, the control circuit 28 may direct the control instruction via the first communication interface 16, and if the vehicle is outside the first range, the control circuit 28 may direct the control instruction via the second communication interface 20.

Referring now to FIG. 3, a block diagram of an exemplary embodiment of the mobile device is shown. The mobile device 18 may comprise a primary control circuit 40 that is configured to control the functions and operations of the mobile device 18. The control circuit 40 may include a processor 42, such as a CPU, microcontroller or microprocessor. The processor 42 executes code stored in a memory (not shown) within the control circuit 40 and/or in a separate memory, such as the memory 44, in order to carry out various operations of the mobile device 18. The memory 44 may be, for example, one or more of a buffer, a flash memory, a hard drive, a removable media, a volatile memory, a non-volatile memory or other suitable devices.

The mobile device 18 may also include an antenna 46 coupled to a wireless communication circuit 48. The communication circuit 48 includes a radio frequency transmitter and receiver for transmitting and receiving signals via the antenna 46. The radio signals may be configured to transmit data and may correspond to various communications protocols. The communication circuit 48 may be configured to operate in a mobile communications system and may be used to send and receive data and/or audiovisual content. Receiver types for interaction with a mobile radio network and/or wireless broadcast network may include GSM, CDMA, WCDMA, GPRS, MBMS, Wi-Fi_33, WiMAX, DVB-H, ISDB-T, etc., as well as advanced versions of these standards that may be developed at a later time. In some embodiments, the communication circuit 48 may include one or more receiver types that provide communication over various ranges and are configured to communicate directly or indirectly with the remote devices 12. For example, the communication circuit 48 may be configured to communicate via a variety of wireless standards including, but not limited to Bluetooth^{®}, BLE connection, LoRa^{®}, SigFox^{®}, and various standards that may be developed in the future.

The mobile device 18 may further include a sound signal processing circuit 50 for processing audio signals transmitted by and received from the communication circuit 48. Coupled to the sound processing circuit 50 are a speaker 52 and a microphone 54 that enable a user to listen and speak via the mobile device 18. The communication circuit 48 and sound processing circuit 50 are each coupled to the control circuit 40 so as to carry out overall operation of the mobile device 18. Audio data may be passed from the control circuit 40 to the sound signal processing circuit 50 for playback to the user. The audio data may include, for example, audio data from an audio file stored in the memory 44 and retrieved by the control circuit 40, or received audio data such as in the form of audio data from a remote server. The sound processing circuit 50 may include any appropriate buffers, decoders, amplifiers, etc.

The display 31 may be coupled to the control circuit 40 by a video processing circuit 56 that converts video data to a video signal used to drive the display 31. The video processing circuit 56 may include any appropriate buffers, decoders, video data processors, etc. The video data may be generated by the control circuit 40, retrieved from a video file that is stored in the memory 44, derived from an incoming video data stream received by the communication circuit 48 from the remote server or obtained by any other suitable method. The mobile device 18 may further comprise a user interface 57 or keypad in communication with the control circuit 40. The user interface may further function in connection with the display 31 to provide for a touch screen user interface configuration.

The mobile device 18 may further include one or more I/O interfaces 58. The I/O interfaces 58 may be in the form of typical mobile telephone I/O interfaces and may include one or more electrical connectors. As is typical, the I/O interfaces 58 may be used to couple the mobile device 18 to a battery charger to charge a battery of a power supply 60 within the mobile device 18. Further, the I/O interfaces 58 may serve to connect the mobile device 18 to a personal computer or other device via a data cable for the exchange of data. The data exchanged may include image data for identifying a vehicle accessory. The mobile device 18 may receive operating power via the I/O interfaces 58 when connected to a power adapter.

The control circuit 40 may comprise one or more timers for carrying out timing functions. The mobile device 18 also may include a position data receiver 62, such as a global positioning system (GPS) receiver. The mobile device 18 also may include a network adapter 64, such as an infrared transceiver and/or an RF adapter or transceiver (e.g., a Bluetooth^{®} adapter or transceiver). The network adapter 64 is configured to communicate with the network adapter 17 of the communication system 10 to form the second communication interface 20. In this configuration, the mobile device 18 and the communication system 10 is configured to communicate various forms of information and data.

For example, the communication system 10 is configured to send instructions to the mobile device 18 via the second communication interface 20. The instructions from the communication system 10 are sent in response to the receipt of an input at the user interface 26. In response to the input, the communication system 10 may instruct the mobile device 18 to request a status and/or control one or more of the remote devices 12 via the third communication interface 22. In this configuration, the communication system 10 may utilize the communication enabled between the mobile device 18 and at least one of the remote devices 12 to control and/or identify a status of the remote devices 12.

The communication system 10 is also configured to send commands instructing the mobile device 18 to perform various tasks, which are preconfigured or programmed by a user to customize the tasks. For example, the communication system 10 may submit an instruction to the mobile device 18 requesting a first preconfigured task. The task may correspond to sending a preconfigured message to one or more predetermined recipients. The message could contain custom text, for example, "On my way home." The message may correspond to an email, short message service (SMS) and/or multimedia message service (MMS), and/or various formats that may be sent via the communication circuit 48 of the mobile device 18.

In some embodiments, the communication system 10 may also be configured to receive programming information, such as software or firmware updates for the communication system 10 from the mobile device 18. The communication system 10 may also receive programming codes or instructions for the communication circuit 14 from the mobile device 18. The communication system 10 is configured to receive one or more communication codes or protocols associated with a remote device 12 (e.g. the remote device 12a) from the mobile device 18. In general, the communication system may request and/or receive any form of information that may be utilized in the operation of the communication system 10 from the mobile device 18.

The mobile device 18 may access information for the communication system 10 via the third communication interface 22. For example, the mobile device 18 identifies or receives model information identifying a specific control scheme of a particular remote device (e.g. a garage door opener) of the remote devices 12. The mobile device 18 may receive and/or transmit information corresponding to control frequencies and codes of the particular remote device to the communication system 10 via the second communication interface 20. In this way, the mobile device 18 may be configured to communicate training information to the communication system 10 such that the communication system 10 may receive and store information to control various remote devices.

The mobile device 18 may further be coupled to a camera system 66 including a controller 68, such as a digital signal processor (DSP). The functions of the controller 68 may be controlled by the control circuit 40. The camera system 66 may further include a sensor 70 (e.g., a charge-coupled device or CCD) to image a field of view as determined by imaging optics 72 of the camera system 66. A light meter 74 may detect illumination conditions in the field of view and a flash 76 may provide supplemental illumination during the capture of image data.

Referring now to FIG. 4, a flow chart is shown demonstrating a method 80 for communication among the communication system 10, the mobile device 18, and at least one of the remote devices 12. The method 80 may begin in response to the control circuit 28 receiving a request for a status indication (82). The request may correspond to an input received via the user interface 26. The status indication may correspond to an operational or any form of status of one or more of the remote devices 12. For example, the status indication may correspond to an open/closed status (e.g. a position of a door or moving barrier), an on/off status, an operational status (e.g. security status of a security system), or any other status indication. The specific device of the remote devices 12 to which the status indication is directed may be configured by a programming function of the communication system 10 and/or the mobile device 18.

In response to the request for the status indication, the communication system 10 communicates the request to the mobile device 18 via the second communication interface 20 (84). The mobile device 18 then transmits the request for the status of one or more of the remote devices 12 via the third communication interface 22 (86). The status request may be received by the device hub 24 or the one or more remote devices 12, which may respond to the mobile device 18 with a status indication via the third communication interface 22. The mobile device may then receive the status of one or more of the remote devices 12 via the third communication interface 22 (88).

In response to receiving the status indication, the mobile device 18 may communicate the status of the one or more of the remote devices 12 to the communication system 10 via the second communication interface 20 (90). The communication system 10 may then display the status of the one or more of the remote devices 12 on the indicator 29 (92). As described herein, the communication system 10 provides for simple communication via the second communication interface 20 such that a status indication of one or more of the remote devices 12 may be identified and displayed by the communication system 10. In this configuration, an occupant of the vehicle may utilize the communication system 10 to identify the status of the remote devices 12 via the second communication interface 20. The second communication interface 20 is utilized in situations when the first communication interface 16 is out of range of the first remote device 12a and/or to communicate with devices (e.g. 12b and 12c) that may not be configured to communicate via the first communication interface 16.

Referring now to FIG. 5, a flow chart is shown demonstrating a method 100 for communication among the communication system 10, the mobile device 18, and at least one of the remote devices 12. The method 100 begins in response to the control circuit 28 receiving a request for a remote control of one or more of the remote devices 12 (102). The request may correspond to an input received via the user interface 26. The control of the remote device may correspond to any operation of one or more of the remote devices 12. For example, the control operation may correspond to an open/close operation, an on/off operation, an activation/deactivation (e.g. activation of a security system), or any other control operation for a remote device. The specific device of the remote devices 12 to which the control is directed is configured by a programming function of the communication system 10 and/or the mobile device 18.

In response to the request for the remote control operation, the communication system 10 may communicate the request to the mobile device 18 via the second communication interface 20 (104). The mobile device 18 may then transmit the request for the control operation of one or more of the remote devices 12 via the third communication interface 22 (106). The control operation may be received by the device hub 24 and communicated to the remote devices 12 or communicated directly to the remote devices 12. In response to a request for the control operation, one or more of the remote devices 12 may update a control state (e.g. open/close, turn on/off, etc.) and may respond to the mobile device 18 with a status indication or verification of the control operation via the third communication interface 22 (108). The mobile device 18 may then receive the status of the one or more of the remote devices 12 via the third communication interface 22 (110).

In response to receiving the status indication, the mobile device 18 may communicate the status of the one or more of the remote devices 12 to the communication system 10 via the second communication interface 20 (112). The communication system 10 may then display the status of the one or more of the remote devices 12 on the indicator 29 (114). As described herein, the communication system 10 may provide for simple communication via the second communication interface such that a control operation of the one or more remote devices 12 may be processed and verified. In this configuration, an occupant of the vehicle may utilize the communication system 10 to control the remote devices 12 via the second communication interface 20. The second communication interface 20 is utilized in situations when the first communication interface 16 is out of range of the first remote device 12a and/orto communicate with devices (e.g. 12b and 12c) that may not be configured to communicate via the first communication interface 16.

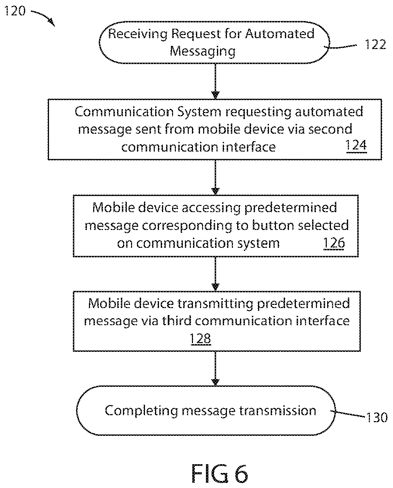

Referring now to FIG. 6, a flow chart is shown demonstrating a method 120 utilizing the communication system 10 to control the mobile device 18 for an automated communication or messaging function. The method begins in response to the control circuit 28 receiving a request for an automated message to be sent by the mobile device 18. The request may correspond to an input received via the user interface 26 (122). The automated message may correspond to a preconfigured message to one or more predetermined recipients. The message could contain custom text, for example, "On my way home." The message may correspond to an email, short message service (SMS) and/or multimedia message service (MMS), and/or various formats that are sent via the communication circuit 48 of the mobile device 18.

In response to the request for the messaging function, the communication system 10 may communicate the request to the mobile device 18 via the second communication interface 20 (124). The mobile device 18 may then access the predetermined message corresponding to a selected button of the user interface 26 of the communication system 10 (126). Once accessed, the mobile device 18 may transmit the predetermined message via the third communication interface 22 (128). The method may be completed upon the transmission of the message (130). In this configuration, the communication system 10 is configured to provide for various automated communication functions that are preconfigured with the mobile device 18 for convenient operation.

It will be understood by one having ordinary skill in the art that construction of the described invention and other components is not limited to any specific material. Other exemplary embodiments of the invention disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the invention as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations.

## Claims

1. A system (10) connected to an automotive vehicle for controlling a remote device (12), the system comprising:
a user interface (26) mounted to a surface of the vehicle and comprising a plurality of input devices;
at least one communication circuit (14) configured to communicate with the remote device (12) via a first communication interface (16) and send instruction to a mobile device (18) via a second communication interface (20), wherein the mobile device (18) is in communication with the remote device (12) via a third communication interface (22);
a GPS interface configured to receive position information of the vehicle; and
a control circuit (28) comprising a processor and a memory in communication with the communication circuit (14) and configured to:
identify a distance from the vehicle to the remote device (12) based on the position information;
based on the distance, determine whether the vehicle is within or outside a first communication range of the remote device (12);
if the vehicle is within the first communication range, direct the communication circuit (14) to transmit the first control instruction to the remote device via a first communication interface (16) in response to at least one input to the user interface (26), wherein the first control instruction is configured to control a state of the remote device (12),
if the vehicle is outside the first range, direct the communication circuit (14) to transmit a second control instruction to the mobile device (18) via the second communication interface in response to the at least one input to the user interface (26), wherein the second control instruction instructs the mobile device (18) to process a predetermined task via the third communication interface (22),
the system being **characterized in that** a command associated with the second control instruction is selected for the mobile device (18) from a plurality of commands based on the position information of the vehicle received from the GPS interface relative to a location of the remote device (12), and
wherein the plurality of commands comprises a local command and a remote command selected based on the position information of the vehicle received from the GPS interface, wherein the local, respectively the remote command is configured to activate the intermediate communication device to communicate the second, respectively a third control instruction via the third communication interface, the second control instruction being configured to control the remote device to update a control state of the remote device, and the third control instruction being configured to request a status of a control state of the remote device.

2. The system according to claim 1, wherein the predetermined task is a preconfigured message sent from the mobile device (18).

3. The system according to claim 1 or 2, wherein the predetermined task is an instruction to the mobile device (18) to send a status request to the remote device (12).

4. The system according to any one of claims 1 to 3, wherein the predetermined task is an instruction to the mobile device (18) to send a request for a remote control operation configured to control a state of the remote device.

5. A method for controlling a remote device (12):
receiving at least one input via a user interface incorporated on a surface of a vehicle, the at least one input configured to control the remote device (12) from a communication system (10) connected to the vehicle;
receiving position information of the vehicle via a GPS interface;
accessing a first control instruction in response to the at least one input;
communicating the first control instruction to the remote device (12) via a first communication interface (16);
accessing a command for an intermediate communication device (18) in response to the at least one input;
communicating the command to the intermediate communication device (18) via a second communication interface (20), wherein the command directs the intermediate communication device (18) to communicate a second control instruction to the remote device (12) via a third communication interface (22); and
selecting the command for the intermediate communication device (18) from a plurality of commands based on the position information of the vehicle received from the GPS interface relative to a location of the remote device (12), the method being **characterized in that** the plurality of commands comprises a local command and a remote command selected based on the position information of the vehicle received from the GPS interface,
wherein the local command is configured to activate the intermediate communication device (18) to communicate the second control instruction via the third communication interface (22), and
wherein the remote command is configured to activate the intermediate communication device (18) to communicate a third control instruction via the third communication interface (22), the second control instruction being configured to control the remote device to update a control state of the remote device, and the third control instruction being configured to request a status of a control state of the remote device.

6. The method according to claim 5, wherein the first communication interface (16) comprises a first communication range less than a second communication range of the third communication interface (22).

7. The method according to any one of claims 5 to 6, wherein the first control instruction and the second control instruction are configured to control the remote device (12) to update a control state.

## Patentansprüche

1. Ein System (10), das mit einem Kraftfahrzeug verbunden ist, um eine entfernte Vorrichtung (12) zu steuern, wobei das System das Folgende umfasst:
eine Benutzerschnittstelle (26), die an einer Oberfläche des Fahrzeugs angebracht ist und eine Vielzahl von Eingabevorrichtungen umfasst;
mindestens eine Kommunikationsschaltung (14), die so konfiguriert ist, dass sie über eine erste Kommunikationsschnittstelle (16) mit der entfernten Vorrichtung (12) kommuniziert und über eine zweite Kommunikationsschnittstelle (20) Anweisungen an eine mobile Vorrichtung (18) sendet, wobei die mobile Vorrichtung (18) über eine dritte Kommunikationsschnittstelle (22) mit der entfernten Vorrichtung (12) in Verbindung steht;
eine GPS-Schnittstelle, die so konfiguriert ist, dass sie Positionsinformationen des Fahrzeugs empfängt; und
eine Steuerschaltung (28), die einen Prozessor und einen Speicher umfasst, die mit der Kommunikationsschaltung (14) kommunizieren, wobei die Steuerschaltung so konfiguriert ist, dass sie Folgendes bewerkstelligt:
Ermitteln einer Entfernung zwischen dem Fahrzeug und der entfernten Vorrichtung (12) auf der Grundlage der Positionsinformationen;
auf der Grundlage der Entfernung, Bestimmen, ob sich das Fahrzeug innerhalb oder außerhalb eines ersten Kommunikationsbereichs der entfernten Vorrichtung (12) befindet;
falls sich das Fahrzeug innerhalb des ersten Kommunikationsbereichs befindet, Anweisen der Kommunikationsschaltung (14), die erste Steueranweisung an die entfernte Vorrichtung über eine erste Kommunikationsschnittstelle (16) als Reaktion auf mindestens eine Eingabe in die Benutzerschnittstelle (26) zu übertragen, wobei die erste Steueranweisung so konfiguriert ist, dass sie einen Zustand der entfernten Vorrichtung (12) steuert,
falls sich das Fahrzeug außerhalb des ersten Bereichs befindet, Anweisen der Kommunikationsschaltung (14), eine zweite Steueranweisung über die zweite Kommunikationsschnittstelle an die mobile Vorrichtung (18) als Reaktion auf die mindestens eine Eingabe in die Benutzerschnittstelle (26) zu übertragen, wobei die zweite Steueranweisung die mobile Vorrichtung (18) anweist, eine vorbestimmte Aufgabe über die dritte Kommunikationsschnittstelle (22) zu bearbeiten,
wobei das System **dadurch gekennzeichnet ist, dass**
ein mit der zweiten Steueranweisung verknüpfter Befehl ausgewählt wird für die mobile Vorrichtung (18) aus einer Vielzahl von Befehlen auf der Grundlage der von der GPS-Schnittstelle ausgehenden empfangenen Positionsinformationen des Fahrzeugs bezüglich eines Standorts der entfernten Vorrichtung (12), und
wobei die Vielzahl von Befehlen einen lokalen Befehl und einen entfernten Befehl umfasst, der bzw. die auf der Grundlage der von der GPS-Schnittstelle empfangenen Positionsinformationen des Fahrzeugs ausgewählt wird bzw. werden, wobei der lokale bzw. der entfernte Befehl so konfiguriert ist, dass er die Zwischen-Kommunikationsvorrichtung aktiviert, um die zweite bzw. eine dritte Steueranweisung über die dritte Kommunikationsschnittstelle zu übermitteln, wobei die zweite Steueranweisung so konfiguriert ist, dass sie die entfernte Vorrichtung steuert, um einen Steuerzustand der entfernten Vorrichtung zu aktualisieren, und wobei die dritte Steueranweisung so konfiguriert ist, dass sie einen Status eines Steuerzustands der entfernten Vorrichtung abfragt.

2. Das System nach Anspruch 1, wobei die vorbestimmte Aufgabe eine vorkonfigurierte Nachricht ist, die von der mobilen Vorrichtung (18) aus gesendet wird.

3. Das System nach Anspruch 1 oder 2, wobei die vorbestimmte Aufgabe eine Anweisung an die mobile Vorrichtung (18) ist, eine Statusabfrage an die entfernte Vorrichtung (12) zu senden.

4. Das System nach einem der Ansprüche 1 bis 3, wobei die vorbestimmte Aufgabe eine Anweisung an die mobile Vorrichtung (18) ist, eine Anforderung für einen Fernsteuerungsvorgang zu senden, der dazu konfiguriert ist, einen Zustand der entfernten Vorrichtung zu steuern.

5. Ein Verfahren zur Steuerung einer entfernten Vorrichtung (12):
Empfangen mindestens einer Eingabe über eine Benutzerschnittstelle, die auf einer Oberfläche eines Fahrzeugs eingebaut ist, wobei die mindestens eine Eingabe so konfiguriert ist, dass sie die entfernte Vorrichtung (12) ausgehend von einem mit dem Fahrzeug verbundenen Kommunikationssystem (10) steuert;
Empfangen von Positionsinformationen des Fahrzeugs über eine GPS-Schnittstelle;
Zugreifen auf eine erste Steueranweisung als Reaktion auf die mindestens eine Eingabe;
Übermitteln der ersten Steueranweisung an die entfernte Vorrichtung (12) über eine erste Kommunikationsschnittstelle (16);
Zugreifen auf einen Befehl für eine Zwischen-Kommunikationsvorrichtung (18) als Reaktion auf die mindestens eine Eingabe;
Übermitteln des Befehls an die Zwischen-Kommunikationsvorrichtung (18) über eine zweite Kommunikationsschnittstelle (20), wobei der Befehl die Zwischen-Kommunikationsvorrichtung (18) anweist, eine zweite Steueranweisung an die entfernte Vorrichtung (12) über eine dritte Kommunikationsschnittstelle (22) zu übermitteln; und
Auswählen des Befehls für die Zwischen-Kommunikationsvorrichtung (18) aus einer Vielzahl von Befehlen auf der Grundlage der von der GPS-Schnittstelle empfangenen Positionsinformationen des Fahrzeugs bezüglich eines Standorts der entfernten Vorrichtung (12),
wobei das Verfahren **dadurch gekennzeichnet ist, dass**
die Vielzahl von Befehlen einen lokalen Befehl und einen entfernten Befehl umfasst, die auf der Grundlage der von der GPS-Schnittstelle ausgehenden empfangenen Positionsinformationen des Fahrzeugs ausgewählt werden,
wobei der lokale Befehl so konfiguriert ist, dass er die Zwischen-Kommunikationsvorrichtung (18) aktiviert, um die zweite Steueranweisung über die dritte Kommunikationsschnittstelle (22) zu übermitteln, und
wobei der entfernte Befehl so konfiguriert ist, dass er die Zwischen-Kommunikationsvorrichtung (18) aktiviert, um eine dritte Steueranweisung über die dritte Kommunikationsschnittstelle (22) zu übermitteln, wobei die zweite Steueranweisung so konfiguriert ist, dass sie die entfernte Vorrichtung steuert, um einen Steuerzustand der entfernten Vorrichtung zu aktualisieren, und wobei die dritte Steueranweisung so konfiguriert ist, dass sie einen Status eines Steuerzustands der entfernten Vorrichtung anfordert.

6. Das Verfahren nach Anspruch 5, wobei die erste Kommunikationsschnittstelle (16) einen ersten Kommunikationsbereich umfasst, der kleiner als ein zweiter Kommunikationsbereich der dritten Kommunikationsschnittstelle (22) ist.

7. Das Verfahren nach irgendeinem der Ansprüche von 5 bis 6, wobei die erste Steueranweisung und die zweite Steueranweisung so konfiguriert sind, dass sie die entfernte Vorrichtung (12) so steuern, dass ein Steuerzustand aktualisiert wird.

## Revendications

1. Un système (10) connecté à un véhicule automobile pour contrôler un dispositif distant (12), le système comprenant :
une interface utilisateur (26) montée sur une surface du véhicule et comprenant une pluralité de dispositifs d'entrée ;
au moins un circuit de communication (14) configuré pour communiquer avec le dispositif distant (12) via une première interface de communication (16) et envoyer des instructions à un dispositif mobile (18) via une deuxième interface de communication (20), sachant que le dispositif mobile (18) est en communication avec le dispositif distant (12) via une troisième interface de communication (22) ;
une interface GPS configurée pour recevoir des informations de position du véhicule ; et
un circuit de contrôle (28) comprenant un processeur et une mémoire en communication avec le circuit de communication (14), et configuré pour :
identifier une distance depuis le véhicule jusqu'au dispositif distant (12) sur la base des informations de position ;
sur la base de la distance, déterminer si le véhicule est à l'intérieur ou en dehors d'une première portée de communication du dispositif distant (12) ;
si le véhicule est à l'intérieur de la première portée de communication, ordonner au circuit de communication (14) de transmettre la première instruction de contrôle au dispositif distant via une première interface de communication (16) en réponse à au moins une entrée sur l'interface utilisateur (26), sachant que la première instruction de contrôle est configurée pour contrôler un état du dispositif distant (12),
si le véhicule est en dehors de la première portée, ordonner au circuit de communication (14) de transmettre une deuxième instruction de contrôle au dispositif mobile (18) via la deuxième interface de communication en réponse à la ou les entrées sur l'interface utilisateur (26), sachant que la deuxième instruction de contrôle ordonne au dispositif mobile (18) de traiter une tâche prédéterminée via la troisième interface de communication (22),
le système étant **caractérisé en ce que**
une commande *(command)* associée à la deuxième instruction de contrôle est sélectionnée pour le dispositif mobile (18) parmi une pluralité de commandes sur la base des informations de position du véhicule, reçues de la part de l'interface GPS, concernant un emplacement du dispositif distant (12), et
sachant que la pluralité de commandes comprend une commande locale et une commande distante sélectionnées sur la base des informations de position du véhicule reçues de la part de l'interface GPS, sachant que la commande locale, respectivement la commande distante, est configurée pour activer le dispositif de communication intermédiaire afin de communiquer la deuxième, respectivement une troisième instruction de contrôle via la troisième interface de communication, la deuxième instruction de contrôle étant configurée pour contrôler le dispositif distant afin de mettre à jour un état de contrôle du dispositif distant, et la troisième instruction de contrôle étant configurée pour effectuer une requête d'état d'un état de contrôle du dispositif distant.

2. Le système d'après la revendication 1, sachant que la tâche prédéterminée est un message préconfiguré envoyé depuis le dispositif mobile (18).

3. Le système d'après la revendication 1 ou 2, sachant que la tâche prédéterminée est une instruction au dispositif mobile (18) d'envoyer une requête d'état au dispositif distant (12).

4. Le système d'après l'une quelconque des revendications 1 à 3, sachant que la tâche prédéterminée est une instruction au dispositif mobile (18) d'envoyer une requête d'opération de contrôle à distance configurée pour contrôler un état du dispositif distant.

5. Un procédé de contrôle d'un dispositif distant (12) :
recevoir au moins une entrée via une interface utilisateur incorporée sur une surface d'un véhicule, l'au moins une entrée étant configurée pour contrôler le dispositif distant (12) depuis un système de communication (10) connecté au véhicule ;
recevoir des informations de position du véhicule via une interface GPS ;
accéder à une première instruction de contrôle en réponse à la au moins une entrée ;
communiquer la première instruction de contrôle au dispositif distant (12) via une première interface de communication (16) ;
accéder à une commande pour un dispositif de communication intermédiaire (18) en réponse à l'au moins une entrée ;
communiquer la commande au dispositif de communication intermédiaire (18) via une deuxième interface de communication (20), sachant que la commande ordonne au dispositif de communication intermédiaire (18) de communiquer une deuxième instruction de contrôle au dispositif distant (12) via une troisième interface de communication (22) ; et
sélectionner la commande pour le dispositif de communication intermédiaire (18) à partir d'une pluralité de commandes sur la base des informations de position du véhicule reçues de la part de l'interface GPS concernant un emplacement du dispositif distant (12),
le procédé étant **caractérisé en ce que**
la pluralité de commandes comprend une commande locale et une commande distante sélectionnées sur la base des informations de position du véhicule reçues de la part de l'interface GPS,
sachant que la commande locale est configurée pour activer le dispositif de communication intermédiaire (18) pour communiquer la deuxième instruction de contrôle via la troisième interface de communication (22), et
sachant que la commande à distance est configurée pour activer le dispositif de communication intermédiaire (18) pour communiquer une troisième instruction de contrôle via la troisième interface de communication (22), la deuxième instruction de contrôle étant configurée pour contrôler le dispositif distant pour mettre à jour un état de contrôle du dispositif distant, et la troisième instruction de contrôle étant configurée pour effectuer une requête d'état d'un état de contrôle du dispositif distant.

6. Le procédé d'après la revendication 5, sachant que la première interface de communication (16) comprend une première portée de communication inférieure à une deuxième portée de communication de la troisième interface de communication (22).

7. Le procédé d'après l'une quelconque des revendications de 5 à 6, sachant que la première instruction de contrôle et la deuxième instruction de contrôle sont configurées pour contrôler le dispositif distant (12) afin de mettre à jour un état de contrôle.
